# EUROPÄISCHE PATENTANMELDUNG

(11) **EP 1 712 838 A2**
(43) Veröffentlichungstag der Anmeldung: **18.10.2006**
(21) Anmeldenummer: 05017151.1
(22) Anmeldetag: 06.08.2005
(51) Int. Cl.: F23G 5/30, F23C 10/20

(54) **Verfahren zur Verbrennung von Abfall**

(30) Priorität: 12.04.2005 EP 05007932
(71) Anmelder: Lurgi Lentjes AG, 40549 Düsseldorf (DE)
(72) Erfinder: Hellwig, Axel, 47803 Krefeld (DE)
(74) Vertreter: Stenger, Watzke & Ring

(57) **Zusammenfassung**

Die vorliegende Erfindung betrifft ein Verfahren zur Verbrennung von Abfall in einem Wirbelbett eines Wirbelschichtofens, daß durch eine gezielte Sekundärluftzufuhr in das Wirbelbett das Wirbelverhalten des Wirbelbettes eingestellt wird.

## Beschreibung

Die vorliegende Erfindung bezieht sich auf ein Verfahren zur Verbrennung von Abfall in einem Wirbelbett eines Wirbelschichtofens.

Wirbelschichtöfen zur Verbrennung von Abfällen sind im Stand der Technik bereits bekannt. Unter den Begriff "Abfall" fallen vorliegend auch Klärschlämme, also kommunale Abwasserschlämme oder wasserhaltige Industrie-Schlämme wie beispielsweise Öl-Wasser-Emulsionen, Fett-Wasser-Emulsionen oder dergleichen.

Die Wirbelschichttechnologie beruht auf dem physikalischen Prinzip, daß Partikel zum Schweben gebracht werden können, wenn sie von unten mit Luft angeströmt werden. Praktisch wird dies umgesetzt, indem eine auf einem Düsenboden lose aufgeschüttete Schicht eines inerten Stoffes, wie beispielsweise Sand, von durch den Düsenboden aufwärts strömender Verbrennungsluft, auch als Primärluft bezeichnet, angeströmt und in einen Schwebe- bzw. Wirbelzustand gebracht wird, der auch Fluidisierung genannt wird. Die Vorteile der Wirbelschichttechnologie bestehen insbesondere darin, daß ein erheblich verbesserter Stoff- und Wärmeaustausch sowie eine gleichmäßige Verbrennung bei niedrigen Emissionswerten erzielt werden können.

Die stationäre Wirbelschicht besteht im wesentlichen aus einem zylindrischen Reaktionsraum, einem Düsenboden, über dem der inerte Stoff liegt, sowie einem Anfahrbrenner. Die Verbrennung erfolgt in einem Temperaturbereich von 850 bis 1050, bevorzugt 850 bis 950° C.

Wichtige Voraussetzungen für die Gewährleistung einer sicheren Verbrennung von Abfall in einer stationären Wirbelschicht sind unter anderem eine ordnungsgemäße Kontrolle der Wirbelbetttemperatur und eine gute Fluidisierung des Bettmaterials, die beide in gewisser Weise von der in den Wirbelschichtofen in Form von Abfall eingetragenen thermischen Last beeinflußt werden. Der in der stationären Wirbelschicht-Verbrennung eingesetzte Brennstoff in Form von Abfall ist sehr inhomogen, zum Beispiel bezüglich Stückigkeit, Wassergehalt, Trocknungseigenschaften, Pyrolisierung oder dergleichen. So kann die Verbrennung im Extremfall beispielsweise im Wirbelbett oder im Freeboard erfolgen. Damit einhergehend kann es zu unerwünschten Übertemperaturen im Wirbelbett bzw. im Freeboard kommen.

Bedingt durch diese Inhomogenität des Abfalls, die damit verbundene Auswirkung auf das Verbrennungsverhalten und somit auch auf die eingetragene thermische Last muß ein ausreichend dimensionierter Wärmespeicher vorhanden sein, der gleichzeitig die Funktion der sicheren Zündquelle erfüllen muß. Dieser Wärmespeicher besteht bei der stationären Wirbelschicht aus dem fluidisierten Bettmaterial.

Die Temperatur des Wirbelbettes soll deshalb nicht außerhalb des Bereiches von 600°C bis 900°C liegen. Bevorzugt ist ein Temperaturbereich von 700°C bis 800°C anzustreben.

Dabei ist Sorge zu tragen, daß die Temperaturverteilung weitestgehend homogen ist. Stationäre Wirbelschichten besitzen bekanntermaßen nur eine gute vertikale Homogenisierung. Die horizontale Homogenisierung ist dagegen eher schlecht, so daß es zu einer Temperaturschieflage innerhalb des Wirbelbettes kommt, die zusätzlich noch durch das oben beschriebene Verbrennungsverhalten des Abfalls negativ in vertikaler Richtung beeinflußt wird.

Bedingt durch das oben beschriebene unterschiedliche Verbrennunsverhalten des Abfalls kommt es zu lokalen Überhitzungen im Wirbelbett und damit zur Agglomeration des Wirbelbettmaterials, wenn der Abfall überwiegend im Wirbelbett verbrennt. Die Folge davon sind häufige Stillstände und eine überdurchschnittlich aufwendige Bettpflege (Austausch des Bettmaterials).

Verbrennt dagegen der überwiegende Teil des Abfalls im Freeboard, so kommt es zur Unterkühlung des Wirbelbettes und zur Überhitzung des Freeboards. Um die Unterkühlung des Wirbelbettes zu vermeiden, muß der Wirbelschichtofen mit entsprechender Stützfeuerung gefahren werden. Die Überhitzung des Freeboards wird durch Eindüsen von Wasser vermieden. Die Anlagenleistung reduziert sich auf Grund der vorher genannten Maßnahmen.

Um eine optimale Voraussetzung für das Verbrennen von Abfall in der stationären Wirbelschicht zu erhalten, ist es erforderlich, die Verbrennungsluft aufzuteilen in
- die Primärluft, die unterhalb des Düsenbodens in den Windkasten aufgegeben wird,
- die Sekundärluft, die über direkt oberhalb des Düsenbodens angeordnete Lanzen aufgegeben wird, und
- die Terfiärluft, die über oberhalb des Wirbelbettes angeordnete Lanzen aufgegeben wird.

Die Aufteilung in die einzelnen Ströme wird durch das Verbrennungsverhalten des Abfalls bestimmt.

Es ist eine Aufgabe der vorliegenden Erfindung, ein Verfahren zur Verbrennung von Abfall in einem Wirbelbett eines Wirbelschichtofens zu schaffen, mit dem die Anlageneffizienz entscheidend verbessert und der Mehrverbrauch an Betriebsmitteln, beispielsweise in Form von Zusatzbrennstoff, Kühlwasser oder Druckluft, reduziert werden kann.

Diese Aufgabe wird gemäß der vorliegenden Erfindung durch ein Verfahren zur Verbrennung von Abfall in einem Wirbelbett eines Wirbelschichtofens g e l ö s t, bei dem durch eine gezielte Sekundärluftzufuhr in das Wirbelbett das Wirbelverhalten des Wirbelbettes eingestellt wird.

Eine Analyse des eingangs beschriebenen herkömmlichen Wirbelschichtofenbetriebs ergab, daß das Wirbelverhalten des eingebrachten Bettmaterials eine zufriedenstellende vertikale Durchmischung aufweist. Dagegen ist bei einer ungleichmäßigen Aufgabe von Brennstoff, also bei einer schwankenden thermischen Last, eine unzureichende horizontale Durchmischung zu beobachten. Die Auswirkungen hervorgerufen von dieser unzureichenden horizontalen Quervermischung sind eine Abkühlung des Wirbelbettes, eine entsprechend erforderliche Zufeuerung von Zusatzbrennstoff zur Erwärmung des Wirbelbettes, eine Reduzierung der Brennstoffaufgabe und überhöhte Feuerungstemperaturen, die eine Eindüsung von Wasser zum Kühlen der Rauchgase erforderlich machen. Die unzureichende horizontale Quervermischung führt demnach zur Minderung der Anlageneffizienz und zum Mehrverbrauch an Betriebsmitteln in Form von Zusatzbrennstoff, Kühlwasser, Druckluft oder dergleichen.

Zur Verbesserung der horizontalen Quervermischung des Wirbelbettes wird dem Wirbelbett erfindungsgemäß gezielt Sekundärluft zugeführt und damit eine Verbesserung der Verbrennungsführung erzielt, wobei die Anlageneffizienz entschieden verbessert und der Betriebsmittelbedarf entscheidend reduziert werden kann.

Die Sekundärluftzufuhr ist vorteilhaft in Bezug auf den zugeführten Sekundärluftvolumenstrom und/oder auf die Anzahl der Sekundärluftaufgabestellen innerhalb des Wirbelschichtofens variierbar und somit bedarfsgerecht einstell- und steuerbar. Je höher der Sekundärluftvolumenstrom ist, desto stärker wird das Wirbelbett durchmischt. Ferner steigt mit der Anzahl der Sekundärluftaufgabestellen die Gleichmäßigkeit der Wirbelbettquervermischung an.

Bevorzugt erfolgt die Sekundärluftzufuhr über Brennstofflanzen, die bei einigen bekannten Wirbelschichtöfen bereits vorgesehen sind und über eine entsprechende Kühlluftzufuhr verfügen, die an die Bedürfnisse der Sekundärluftzufuhr angepaßt werden kann. Auf diese Weise wird eine Nachrüstung bekannter Wirbelschichtöfen zum erfndungsgemäßen Betreiben der Anlage erleichtert.

Femer wird oberhalb des Wirbelbettes bevorzugt Tertiärluft zugeführt. Die zusätzliche Zufuhr von Tertiärluft oberhalb des Wirbelbettes führt beim Verbrennen von Abfall mit einer hohen Pyrolysegasentwicklung zu einem verbesserten Ausbrand.

Nachfolgend wird eine Ausführungsform des erfindungsgemäßen Verfahrens zur Verbrennung von Abfall in einem Wirbelbett eines Wirbelschichtofens unter Bezugnahme auf die beiliegende Zeichnung genauer beschrieben. Darin ist:
- Fig. 1: eine schematische Ansicht eines Wirbelschichtofens;
- Fig. 2: eine Querschnittansicht entlang der in Fig. 1 dargestellten Schnittlinie II-II; und
- Fig. 3: eine Querschnittansicht entlang der in Fig. 2 dargestellten Schnittlinie III-III.

Gleiche Bezugszeichen beziehen sich nachfolgend auf gleichartige Bauteile.

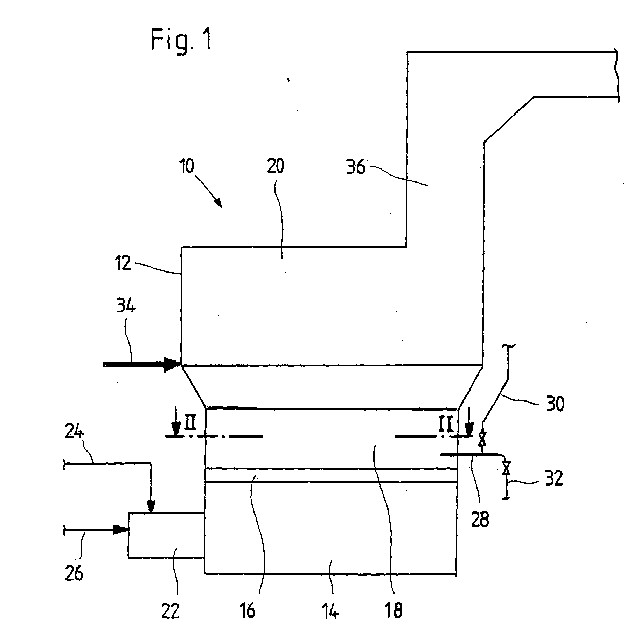

Fig. 1 zeigt eine schematische Ansicht eines Wirbelschichtofens 10, der eine im wesentlichen zylindrische Wandung 12 aufweist. In dem durch die Wandung 12 gebildeten Innenraum des Wirbelschichtofens 10 sind, von unten nach oben betrachtet, ein Windkasten 14, ein Düsenboden 16, ein Wirbelbett 18 und ein Freeboard 20 angedeutet, wobei sich der Innenraum des Wirbelschichtofens 10 vom Wirbelbett 18 zum Freeboard 20 konusförmig erweitert. Im Bereich des Windkastens 14 ist ein Anfahrbrenner 22 vorgesehen, zu dem eine Leitung 24 für die Zufuhr von Zusatzbrennstoff und eine Leitung 26 für die Zufuhr von Verbrennungsluft führen. In das Wirbelbett 18 münden mehrere Brennstofflanzen 28, von denen in Fig. 1 nur eine schematisch dargestellt ist. Auch den Brennstofflanzen 28 werden über entsprechende Leitungen 30 und 32 Zusatzbrennstoff und Luft zugeführt.

Während des Betriebs strömt Primärluft von dem Windkasten 14 durch den Düsenboden 16 und wirbelt die dort aufgeschüttete Schicht eines inerten Stoffes, beispielsweise Sand, auf und überführt diesen in einen Schwebe- bzw.

Wirbelzustand. Da die Primärluft im wesentlichen von unten aufwärts strömt, erfolgt hauptsächlich eine vertikale Durchmischung des Wirbelbettes. Abfall wird oberhalb des Wirbelbettes 18 an der Abfallaufgabe 34 zugeführt. Der Abfall gelangt ins Wirbelbett 18 und wird dort verbrannt. Das entstehende Abgas strömt aufwärts und verläßt den Wirbelschichtofen 10 über einen Auslaßkanal 36. Das Rauchgas wird anschließend zur Energiegewinnung genutzt und am Ende der Prozeßkette gereinigt, bevor es in die Atmosphäre abgelassen wird.

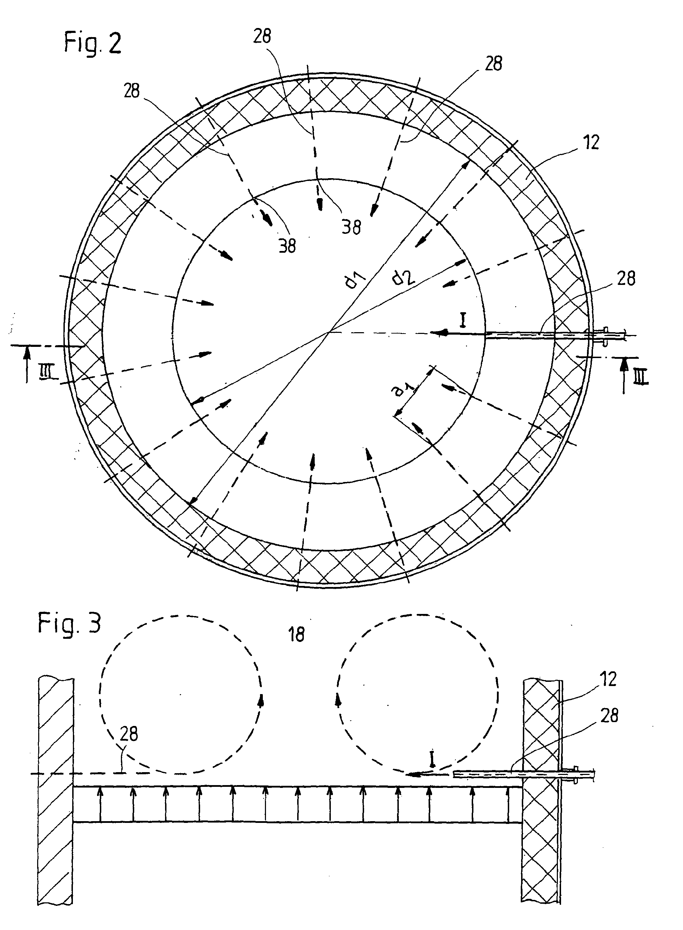

Fig. 2 ist eine Querschnittansicht entlang der in Fig. 1 dargestellten Schnittlinie II-II. Wie in Fig. 2 beispielhaft gezeigt ist, bildet die Wandung 12 des Wirbelschichtofens 10 einen Innenraum mit einem Durchmesser d₁. Entlang der Wandung 12 sind in gleichmäßigen Abständen a₁ Brennstofflanzen 28 angeordnet, die durch die Wandung 12 in den Innenraum des Wirbelschichtofens 10 in Höhe des in Fig. 1 dargestellten Wirbelbettes 18 ragen. Von den Brennstofflanzen 28 ist der Einfachheit halber nur eine im Detail dargestellt. Die Lanzen 28 stehen von der Wandung 12 bemessen z. B. 800 mm in den Innenraum vor, so daß jede der Mündungsöffnungen 38 der Brennstofflanzen 28 auf einer Kreislinie mit einem Durchmesser d2 positioniert ist. Jede der Lanzen 28 definiert im Betriebszustand einen horizontalen Impuls I, der aus der über die Brennstofflanzen 28 zugeführten Sekundärluft herrührt. Dadurch wird die horizontale Homogenität der Temperatur so verbessert, daß das Wirbelbett keine lokalen Überhitzungen und Unterkühlungen aufweist. Durch diese zusätzliche horizontale Durchmischung des Wirbelbettes wird die Anlageneffizienz entscheidend verbessert und der Betriebsmittelbedarf entsprechend reduziert. Aufgrund der Tatsache, daß über die Brennstofflanzen 28 mehr Sekundärluft in das Wirbelbett 18 eingetragen wird, kann stets eine überstöchiometrische Verbrennung gewährleistet werden. Eine Überschreitung der Freeboard-Temperatur ist somit nicht zu erwarten, so daß auch kein Wasser zum Quenchen des Rauchgases eingedüst werden muß. Die Anzahl der Sekundärluftaufgabestellen und die Sekundärluftmenge sind abhängig von der Qualität des Abfalls, der Pyrolyseeigenschaften und der Stückigkeit. Die Zufuhr von Tertiärluft kann erforderlich werden, um den Ausbrand im Freeboard zu verbessern. Die Anzahl der Aufgabestellen und die Luftmenge hängen überwiegend von den Pyrolyseeigenschaften des Abfalls ab.

Fig. 3 ist eine Querschnittansicht entlang der in Fig. 2 dargestellten Schnittlinie III-III. Jede der Lanzen 28 definiert im Betriebszustand einen horizontalen Sekundärluftimpuls I, der die Lanzen 28 verläßt und anschließend im Wirbelbett 18 verwirbelt, was in Fig. 3 anhand der gestrichelten Linie dargestellt ist.

### Bezugszeichenliste:

- 10: Wirbelschichtofen
- 12: Wandung
- 14: Windkasten
- 16: Düsenboden
- 18: Wirbelbett
- 20: Freeboard
- 22: Anfahrbrenner
- 24: Leitung
- 26: Leitung
- 28: Brennstofflanzen
- 30: Leitung
- 32: Leitung
- 34: Abfallaufgabe
- 36: Auslaßkanal
- 38: Mündungsöffnungen

## Patentansprüche

1. Verfahren zur Verbrennung von Abfall in einem Wirbelbett eines Wirbelschichtofens,
**dadurch gekennzeichnet,daß**
durch eine gezielte Sekundärluftzufuhr in das Wirbelbett das Wirbelverhalten des Wirbelbettes eingestellt wird.

2. Verfahren nach Anspruch 1, bei dem durch die Sekundärluftzufuhreine im wesentlichen horizontale Durchmischung des Wirbelbettes eingestellt wird.

3. Verfahren nach einem der vorhergehenden Ansprüche, bei dem die Sekundärluftzufuhr in Bezug auf den zugeführten Sekundärluftvolumenstrom und/oder auf die Anzahl der Sekundärluftaufgabestellen innerhalb des Wirbelschichtofens variierbar ist.

4. Verfahren nach einem der vorhergehenden Ansprüche, bei dem die Sekundärluftzufuhr auch über Brennstofflanzen erfolgen kann.

5. Verfahren nach einem der vorhergehenden Ansprüche, bei dem oberhalb des Wirbelbettes Tertiärluft zugeführt wird.
